# EUROPÄISCHE PATENTSCHRIFT

(11) **EP 2 811 192 B1**
(45) Veröffentlichungstag und Bekanntmachung des Hinweises auf die Patenterteilung: **07.08.2019**
(21) Anmeldenummer: 14170070.8
(22) Anmeldetag: 27.05.2014
(51) Int. Cl.: F16C 35/067, A61G 5/10, B60B 33/00, B60B 33/04

(54) **Schwenkrollenbaugruppe für einen Rollstuhl**
Pivoting roller assembly for a wheelchair
Ensemble de roues pivotantes pour fauteuil roulant

(30) Priorität: 28.05.2013 DE 202013102319 U
(43) Veröffentlichungstag der Anmeldung: 10.12.2014
(73) Patentinhaber: Sunrise Medical GmbH, 69254 Malsch/Heidelberg (DE)
(72) Erfinder: Bergmann, Rudolf, 67240 Bobenheim-Roxheim (DE)
(74) Vertreter: Weber-Bruls, Dorothée

(56) Entgegenhaltungen:
- EP-A1- 0 607 551
- EP-A1- 2 505 384
- DE-A1- 10 106 688
- GB-A- 402 156
- GB-A- 2 292 776
- US-A- 4 432 116
- US-A- 4 969 232
- US-A- 5 167 048
- US-A1- 2003 205 878
- US-A1- 2004 003 482
- US-A1- 2004 004 331
- US-A1- 2005 028 319
- US-A1- 2008 209 673

## Beschreibung

Die vorliegende Erfindung betrifft eine Schwenkrollenbaugruppe für einen Rollstuhl, umfassend einen Schwenkpfosten, der um eine erste Drehachse innerhalb eines Rollstuhlrahmengehäuses schwenkbar ist, eine Schwenkrollenhalterung, die mit dem Schwenkpfosten um die erste Drehachse schwenkbar ist und relativ zum Schwenkpfosten um eine zweite, senkrecht zur ersten Drehachse verlaufende Drehachse A3, A3' unter Zwischenordnung eines Lagers drehbar ist, und eine Schwenkrolle, die drehbar um eine dritte, parallel zur ersten Drehachse verlaufende Drehachse von der Schwenkrollenhalterung abgestützt ist.

Solche Schwenkrollenanordnungen sind im Stand der Technik gut bekannt, so insbesondere auch aus der EP 1 532 007 B1 oder der dazu parallelen US 2004/0003482 A1. Die dort beschriebene Schwenkrollenanordnung ist in den Figuren 1 und 2 dargestellt. Diese Figuren zeigen eine Schwenkrollenbaugruppe 10 mit einer Schwenkrollenhalterung in Form einer Schwenkrollengabel 12, einer Schwenkrolle 14, einem Schwenkpfosten 16, einem Lager 18 und einem Zylindergehäuse 20, das mit einem nicht dargestellten Rollstuhlrahmen verbindbar ist. In einem Rollstuhl kommen zwei solcher Schwenkrollenanordnungen zum Einsatz. Die Schwenkrolle 14 ist dabei um eine Schwenkrollenachse 22 drehbar von der Schwenkrollengabel 12 gehalten, während die Schwenkrollengabel 12 um eine erste Drehachse A1 dank des Lagers 18 relativ zum Schwenkpfosten 16 drehbar ist. Das Lager 18 umfasst eine Laufbahn 18a, steht mit einem Abstandsring 24 in Verbindung und weist verschieden Lagerelemente, die durch eine Scheibe 26 voneinander getrennt sind, auf. Der Schwenkpfosten 16 seinerseits umfasst einen Schaft 28a, der an die Laufbahn 18a des Lagers 18 angepasst ist, und einen Bolzen 28, mit dem der Schwenkpfosten 16 in eine Drehbuchse 30 innerhalb des Zylindergehäuses 20 eingeschraubt ist. Die Drehbuchse 30 weist ein Durchgangsloch 30a für einen Schwenkstift 32 auf, wobei der Schwenkstift 32 des Weiteren das Zylindergehäuse 20 passiert und eine zweite Drehachse A2 festlegt, um die herum der Schwenkpfosten 16 zusammen mit der Schwenkrollengabel 12 verschwenkbar ist.

Bei Rollstühlen ist es vorteilhaft, eine Radhöhenanpassung vornehmen zu können, die die Notwendigkeit einer genauen Anpassung des Schwenkwinkels des Schwenkpfostens 16 fordert. Zu diesem Zwecke ist es vorteilhaft, die Winkellage des Schwenkpfostens 16 um die zweite Drehachse A2 bezogen auf das Zylindergehäuse 20 fixierbar zu machen. Die Winkellage kann dabei wiederum durch eine Profilanordnung 34 fixiert werden, die ihrerseits ein oberes Profil 36 mit einem Spalt 36a und einem Zahnprofil 36b aufweist, das in ein Zahnprofil 38b eines unteren Profils 38, wie im Rahmen der EP 1 532 007 B1 beschrieben, eingreift.

Die EP 1 812 250 B1 sowie auch die dazu parallele US 2005/0028319 A1 beschäftigt sich mit der Einstellbarkeit der Winkellage des Schwenkpfostens 16 und schlägt in diesem Zusammenhang den Einsatz von Schrauben vor. Genauer gesagt kommt dort eine Stellschraube zum Einsatz, die in ein oberes Ende der Drehbuchse 30 so einschraubbar ist, dass sie in Eingriff mit dem Schwenkstift 32 bringbar ist.

Nachteilig bei den bekannten Anordnungen ist es, dass die Schwenkrollengabeln zu einem Flattern während eines Fahrbetriebs neigen.

Die US 5,167,048 beschreibt eine Schwenkrollenhalteeinrichtung, bei der ein Versteifung durch eine Federscheibe bewirk wird, die senkrecht zur Drehachse einer Schwenkrollenhalterung relativ zu einem Schwenkpfosten und somit parallel zu einem Lager des Schwenkpfostens einen Druck anlegen kann.

Aus der US 4,969,232 ist eine einstellbare Schwenkrollenanordnung bekannt, bei der zwischen einer Schwenkrollenhalterung und einem Schwenkpfosten ein Lager mit ineinander verkeilbaren Teilen zum Reduzieren eines Flatterns zum Einsatz kommt.

Die EP 2 505 384 A1 betrifft einen Rollstuhl, bei dem die Winkelposition einer Drehachse einer Laufrolle in Bezug auf den Rahmen des Rollstuhls kontinuierlich und stufenlos einstellbar ist. Dabei kann eine Lenkrollenanordnung durch eine transversale Achse mit einem Rahmenabschnitt verbunden sein. Ein einstellbarer Sperrmechanismus verhindert, dass die Lenkrollenanordnung verschwenkt, indem die Lenkrollenanordnug in der gewünschten Winkelstellung blockiert wird.

In der US 5,167,048 ist eine Lenkrollenhaltevorrichtung offenbart, die ein Flattern einer Lenkrolle verhindert und einfach einstellbar ist. Die Vorrichtung umfasst dabei eine Schaftaufnahmekammer, in der eine Buchse mit Lagerelementen angeordnet ist. Eine einstellbare Sperrvorrichtung sichert die Schaftbaugruppe in der Buchse und ist an einer Öffnung der Aufnahmekammer positioniert. In einer Ausführungsform kann die Vorrichtung erste und zweite Kragen zur Einstellung einer Vorspannung der Lager umfassen.

Eine Lenkrollenvorrichtung gemäß der EP 0 607 551 A1 weist eine U-förmigen Kappe mit einem oberen Stegteil und zwei sich benachbart nach unten erstreckende Schenkelabschnitte auf, um einen Lenkrollenaufnahmeraum zu definieren. Eine Lenkrolle ist drehbar im Raum gelagert, wobei die Kappe die Lenkrolle teilweise überdeckt. Die Kappe umfasst eine kollosionsfeste Lagerschale, die integral zum Aufnehmen und Halten einer Lagerbaugruppe ausgebildet ist und ein Ende eines Struktur-Trageschafts befestigt. Ein Schwenkkopf mit einem Loch in der Mitte ist auf der Kappe angeordnet und ermöglicht einem gegenüberliegenden Ende des Schaftes hindurchragen. Ein von der Kappe abgestützter Bremsmechanismus kann zum Hemmen einer Drehung der Lenkrolle betrieben werden.

Eine Vorderradgabel, die ein Rad trägt, wird gemäß der GB 2 292 776 A von zwei separaten Teilen gebildet. Jedes Teil hat einen Beinabschnitt und einen Körperabschnitt. Die beiden Teile sind mit Hilfe von Schrauben oder Bolzen zusammengeklemmt und nehmen einen Lagerring auf, in dem ein Trägerelement eines Teils angebracht ist, an dem das Rad befestigt werden soll. Die beiden Teile können alternativ mittels einer Hülse oder Kappe befestigt sein.

Die US 2008/0209673 beschreibt eine Laufrollenanordnung mit einer Laufrollenhalterung, die an einem Rahmen einer mobilen Vorrichtung anbringbar ist und an eine Lenkrollengabel angreift, und mit einer Vorspanneinrichtung, die die Drehung eines Laufrollenschafts beschränken und dadurch ein Flattern und Abtriften verhindern kann, so dass die mobilen Vorrichtung auf ihrer Spur bleibt. Die Vorspanneinrichtung kann derart sein, dass der Laufrollenschaft zumindest eine vertikale Kerbe darin definiert und sich ein Federkolben in der Laufrollenhalterung befindet.Der Federkolben hat eine interne Feder und ein bewegliches Kugelelement an der Feder, das dem Laufrollenschaft zugewandt ist, so dass die Kugel gegen den Laufrollenschaft vorgespannt ist und sich in der Laufrollenschaft-Kerbe befindet, wenn der Laufrollenschaft sich in einer gewünschten Drehposition befindet.Die Vorspanneinrichtung kann auch Magnete an dem Laufrollenschaft und der Laufrollenhalterung nutzen die an gegenüberliegenden Anziehungspolen ausgerichtet sind, wenn die Laufrolle in einer gewünschten Position ist. Weitere Laufrollenanordnungen sind aus der GB 402,156 und der US 4,432,116 bekannt. Aufgabe der vorliegenden Erfindung ist es, die gattungsgemäße Schwenkrollenbaugruppe derart weiterzuentwickeln, dass die Nachteile des Stands der Technik überwunden werden, insbesondere dass konstruktiv einfach ein Flattern der Schwenkrolle vermieden wird.

Erfindungsgemäß wird diese Aufgabe gelöst durch die Merkmale des Kennzeichens von Anspruch 1. Bevorzugte erfindungsgemäße Ausführungsformen sind in den Ansprüchen 2 bis 5 beschrieben.

Durch den erfindungsgemäßen Einsatz zumindest eines Gewindestifts kann das Lager zwischen dem Schwenkpfosten und der Schwenkrollenhalterung direkt verkeilt werden, so dass eine Kraft über das verkeilte Lager senkrecht zur Drehachse der Drehbewegung des Schwenkpfosten relativ zur Schwenkrollenhalterung wirkt, die eine Hemmung und somit Vermeidung, zumindest Reduzierung, eines Flatterns der Schwenkrolle bewirkt. Dies führt zu einem einfachen und leicht nachrüstbaren Aufbau. Zudem wird durch ein gezieltes Eindrehen zumindest eines Gewindestifts z.B. in Form einer Madenschraube ein gezieltes Hemmen ermöglicht.

Weitere Merkmale und Vorteile der Erfindung ergeben sich aus der nachfolgenden Beschreibung, in der Ausführungsbeispiele anhand schematischer Zeichnungen erläutert sind. Dabei zeigt:

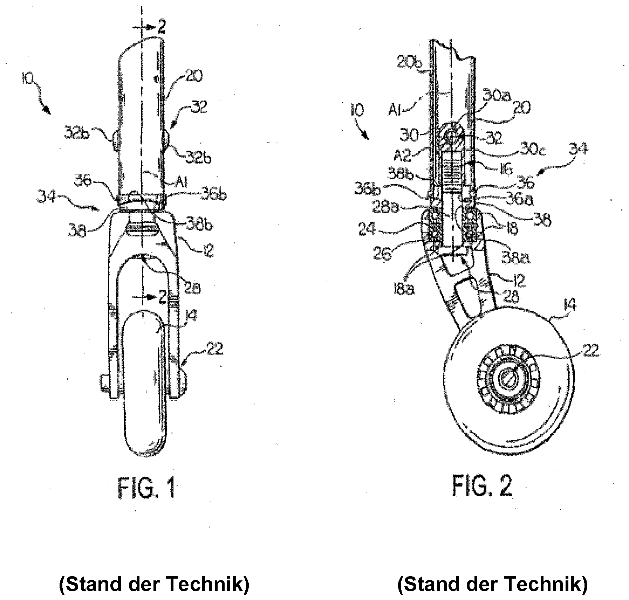

- Figur 1: eine bekannte Schwenkrollenbaugruppe in Draufsicht;
- Figur 2: eine Schnittdarstellung längs der Schnittlinie 2-2 in Figur 1;
- Figur 3: eine Explosionsdarstellung eines Teils einer erfindungsgemäßen Schwenkrollenbaugruppe; und
- Figur 4: eine weitere Explosionsansicht eines Teils einer weiteren erfindungsgemäßen Schwenkrollenbaugruppe.

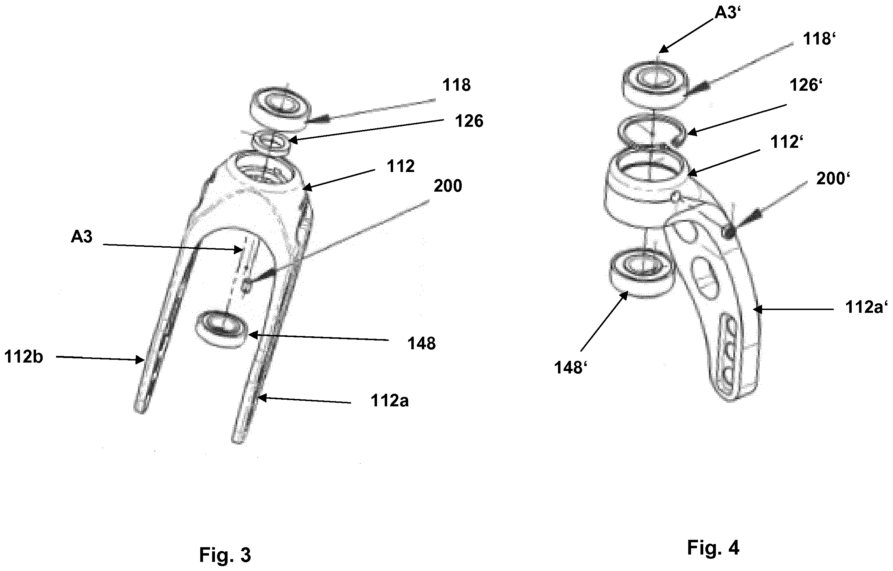

Eine erfindungsgemäße, in Figur 3 gezeigte Schwenkrollenbaugruppe umfasst in üblicher Weise eine Schwenkrollenhalterung in Form einer Schwenkrollengabel 112, ein Lager mit zwei Lagerelementen 118, 148 zwischen der Schwenkrollengabel 112 und einem nicht gezeigten Schwenkpfosten, wobei zwischen den Lagerelementen 118, 148 eine Scheibe 126 angeordnet ist. In üblicher Weise umfasst die Schwenkrollengabel 112 des Weiteren zwei Schwenkrollenhaltearme in Form von Schwenkrollengabelarme 112a, 112b, zwischen denen eine nicht gezeigte Schwenkrolle drehbar anordbar ist.

Um ein Flattern der Schwenkrollengabel 112 und somit der Schwenkrolle beim Drehen um die Drehachse A3 (zweite Drehachse) zu vermeiden, kommt erfindungsgemäß ein Gewindestift 200 zum Einsatz, der derart in die Schwenkrollenbaugruppe 10 einschraubbar ist, dass er an das obere Lagerelement 113 zum Verspannen desselben angreift. Genauer gesagt kommt es bei dem Verspannen zu einem Verkeilen, das dazu führt, dass sich senkrecht zur Drehachse A3 eine Kraft aufbaut, die eine Hemmung herbeiführt.

Bei einer alternativen Ausführungsform gemäß Figur 4, die wiederrum eine Schwenkrollenhalterung 112' mit nur einem Schwenkrollenhaltearm 112'a, zwei Lagerelemente 118', 148' und eine Scheibe 126' aufweist, wird ein Flattern der Schwenkrollenhalterung 112' beim Drehen um die Achse A3' (zweite Drehachse) durch Einschrauben eines Gewindestifts 200' in die Schwenkrollenhalterung 112' zwecks Angreifen an das obere Lagerelement 118' durch gezieltes Verspannen desselben vermieden.

Da das Maß der Verspannung des Lagerelements 118 beziehungsweise 118' von dem Eindrehmaß des jeweiligen Gewindestifts 200, 200' abhängt, kann eine gezielte Justage beim Einschrauben des jeweiligen Gewindestifts 200, bzw. 200' stattfinden.

Die in der voranstehenden Beschreibung, in den Ansprüchen sowie den Zeichnungen offenbarten Merkmale können sowohl einzeln als auch in jeder beliebigen Kombination für die Verwirklichung der Erfindung in ihren verschiedenen Ausführungsformeln wesentlich sein.

### Bezugszeichenliste

- 10: Schwenkrollenbaugruppe
- 12: Schwenkrollengabel
- 14: Schwenkrolle
- 16: Schwenkpfosten
- 18: Lager
- 18a: Laufbahn
- 20: Zylindergehäuse
- 22: Schwenkrollenachse
- 24: Abstandsring
- 26: Scheibe
- 28: Bolzen
- 28a: Schaft
- 30: Drehbuchse
- 30a: Durchgangsloch
- 32: Schwenkstift
- 34: Profilanordnung
- 36: oberes Profil
- 36a: Spalt
- 36b: Zahnprofil
- 38: unteres Profil
- 38b: Zahnprofil
- 112, 112': Schwenkrollenhalterung
- 112a, 112b, 112', 112b': Schwenkrollenhaltearm
- 118, 118': Lager
- 126, 126': Scheibe
- 148, 148': Lagerelement
- 200, 200': Gewindestift
- A1: Drehachse
- A2: Drehachse
- A3, A3': Drehachse

## Patentansprüche

1. Schwenkrollenbaugruppe für einen Rollstuhl, umfassend
einen Schwenkpfosten, der um eine erste Drehachse innerhalb eines Rollstuhlrahmengehäuses schwenkbar ist,
eine Schwenkrollengabel (112, 112'), die mit dem Schwenkpfosten um die erste Drehachse schwenkbar ist und relativ zum Schwenkpfosten um eine zweite, senkrecht zur ersten Drehachse verlaufende Drehachse A3, A'3 unter Zwischenordnung eines Lagers (118, 118', 148, 148') drehbar ist, und
eine Schwenkrolle, die drehbar um eine dritte, parallel zur ersten Drehachse verlaufende Drehachse von der Schwenkrollengabel abgestützt ist,
**gekennzeichnet durch**
zumindest ein Verspannelement in Form zumindest eines Gewindestifts (200, 200') zum Verspannen des Lagers (118, 118', 148, 148'), wobei
ein erster Gewindestift (200) von unten, in Richtung des Rollstuhlrahmengehäuses an das Lager (118, 148) angreift und durch einseitiges Eindrehen das Lager gezielt verkeilt,
und/oder
ein zweiter Gewindestift (200') durch eine Schwenkrollenhalterung des Rollstuhlrahmengehäuses in Form der Schwenkrollengabel (112') hindurch an das Lager (118', 148') angreift und durch einseitiges Eindrehen das Lager gezielt verkeilt.

2. Schwenkrollenbaugruppe nach Anspruch 1, **dadurch gekennzeichnet, dass**
das Lager ein oberes, der Schwenkrolle abgewandtes Lagerelement (118') und ein unteres, der Schwenkrolle zugewandtes Lagerelement (148') aufweist, und
der zweite Gewindestift (200') an das obere Lagerelement (118') angreift, wobei vorzugsweise zwischen den Lagerelementen (118', 148') eine Scheibe oder ein Abstandshalter (126') angeordnet ist.

3. Schwenkrollenbaugruppe nach Anspruch 1 oder 2, **dadurch gekennzeichnet, dass**
der erste Gewindestift (200) von unten, in Richtung des Rollstuhlrahmengehäuses an das Lager (118, 148) parallel zur zweiten Drehachse A3, A3' angreift.

4. Schwenkrollenbaugruppe nach einem der vorangehenden Ansprüche, **dadurch gekennzeichnet, dass**
der zweite Gewindestift (200') durch das Rollstuhlrahmengehäuse hindurch an das Lager (118', 148') senkrecht zur zweiten Drehachse A3, A3'angreift.

5. Schwenkrollenbaugruppe nach einem der vorangehenden Ansprüche, **dadurch gekennzeichnet, dass**
der erste und/oder zweite Gewindestift (200, 200') als Madenschraube ausgebildet ist.

## Claims

1. A caster wheel assembly for a wheelchair, comprising
a swivel post which is pivotable about a first axis of rotation within a wheelchair frame housing,
a caster wheel fork (112, 112') which is pivotable with the swivel post about the first axis of rotation and is rotatable relative to the swivel post about a second axis of rotation A3, A3' running perpendicularly to the first axis of rotation with interposition of a bearing (118, 118', 148, 148'), and
a caster wheel which is rotatably supported by the caster wheel fork about a third axis of rotation running parallel to the first axis of rotation,
**characterised by**
at least one clamping element in the form of at least one threaded pin (200, 200') for clamping the bearing (118, 118', 148, 148'), wherein
a first threaded pin (200) engages the bearing (118, 148) from below in the direction of the wheelchair frame housing and specifically wedges the bearing by unidirectional screwing in, and/or
a second threaded pin (200') engages the bearing (118, 148) through a caster wheel mounting of the wheelchair frame housing in the form of the caster wheel fork (112') and specifically wedges the bearing by unidirectional screwing in.

2. The caster wheel assembly according to claim 1, **characterised in that**
the bearing has an upper bearing element (118') facing away from the caster wheel and a lower bearing element (148') facing the caster wheel, and the second threaded pin (200') engages the upper bearing element (118'), wherein preferably a disc or a spacer (126') is arranged between the bearing elements (118', 148').

3. The caster wheel assembly according to claim 1 or 2, **characterised in that**
the first threaded pin (200) engages the bearing (118, 148) from below in the direction of the wheelchair frame housing parallel to the second axis of rotation A3, A3'.

4. The caster wheel assembly according to any one of the preceding claims, **characterised in that**
the second threaded pin (200') engages the bearing (118', 148') through the wheelchair frame housing perpendicularly to the second axis of rotation A3, A3'.

5. The caster wheel assembly according to any one of the preceding claims, **characterised in that**
the first and/or second threaded pin (200, 200') is formed as a grub screw.

## Revendications

1. Ensemble de roulettes pivotantes pour un fauteuil roulant, comprenant
une tige de pivotement qui peut pivoter autour d'un premier axe de rotation à l'intérieur d'un boîtier de châssis de fauteuil roulant,
une fourche de roulette pivotante (112, 112') qui peut pivoter avec la tige de pivotement autour du premier axe de rotation et qui est rotative par rapport à la tige de pivotement autour d'un deuxième axe de rotation A3, A3' s'étendant perpendiculairement au premier axe de rotation avec interposition d'un palier (118, 118', 148, 148'), et
une roulette pivotante qui est supportée par la fourche de roulette pivotante de façon rotative autour d'un troisième axe de rotation s'étendant parallèlement au premier axe, **caractérisé par**
au moins un élément de serrage sous la forme d'au moins une tige filetée (200, 200') pour le serrage du palier (118, 118', 148, 148'), dans lequel une première tige filetée (200) engage le palier (118, 148) par le bas dans la direction du boîtier de châssis de fauteuil roulant et bloque spécifiquement le palier par vissage unidirectionnel, et/ou
une deuxième tige filetée (200') engage le palier (118', 148') à travers un support de roulette pivotante du boîtier de châssis de fauteuil roulant sous la forme de la fourche de roulette pivotante (112') et bloque spécifiquement le palier par vissage unidirectionnel.

2. Ensemble de roulettes pivotantes selon la revendication 1, **caractérisé en ce que** le palier a un élément de palier supérieur (118') tourné à l'opposé de la roulette pivotante et un élément de palier inférieur (148') tourné vers la roulette pivotante, et la deuxième tige filetée (200') engage l'élément de palier supérieur (118'), dans lequel de préférence un disque ou une entretoise (126') est disposé(e) entre les éléments de palier (118', 148').

3. Ensemble de roulettes pivotantes selon la revendication 1 ou 2, **caractérisé en ce que** la première tige filetée (200) engage le palier (118, 148) par le bas dans la direction du boîtier de châssis de fauteuil roulant parallèlement au deuxième axe de rotation A3, A3'.

4. Ensemble de roulettes pivotantes selon l'une quelconque des revendications précédentes, **caractérisé en ce que**
la deuxième tige filetée (200') engage le palier (118', 148') à travers le boîtier de châssis de fauteuil roulant perpendiculairement au deuxième axe de rotation A3, A3'.

5. Ensemble de roulettes pivotantes selon l'une quelconque des revendications précédentes, **caractérisé en ce que**
la première et/ou la deuxième tige filetée (200, 200') est formée comme vis sans tête.
